# EUROPÄISCHE PATENTSCHRIFT

(11) **EP 2 334 778 B1**
(45) Veröffentlichungstag und Bekanntmachung des Hinweises auf die Patenterteilung: **06.07.2016**
(21) Anmeldenummer: 09782794.3
(22) Anmeldetag: 09.09.2009
(51) Int. Cl.: C11D 3/50, B01J 13/18

(54) **STABILISIERUNG VON MIKROKAPSEL-SLURRIES**
STABILIZATION OF MICROCAPSULE SLURRIES
STABILISATION DE SUSPENSIONS DE MICROCAPSULES

(30) Priorität: 17.10.2008 DE 102008051799
(43) Veröffentlichungstag der Anmeldung: 22.06.2011
(73) Patentinhaber: Henkel AG & Co. KGaA, 40589 Düsseldorf (DE)
(72) Erfinder: SUNDER, Matthias, 40593 Düsseldorf (DE); SCHMIEDEL, Peter, 40599 Düsseldorf (DE); BAUER, Andreas, 41564 Kaarst (DE); STURM, Mario, 51371 Leverkusen (DE); VÖLKEL, Heinz-Jürgen, 40764 Langenfeld (DE)
(86) Internationale Anmeldenummer: PCT/EP2009/061662
(87) Internationale Veröffentlichungsnummer: WO 2010/043452

(56) Entgegenhaltungen:
- WO-A1-2006/018694
- WO-A2-01/49817
- DE-A1-102006 015 940
- DE-C1- 4 006 570
- K. Hong, S. Park: "Melamine resin microcapsules containing fragrant oil: synthesis and characterization" Materials Chemistry and Physics Bd. 58, 1999, Seiten 128-131, XP002559595 Gefunden im Internet: URL:www.sciencedirect.com> [gefunden am 2009-12-09]
- H. Zhang et al.: "Fabrication and performances of microencpasulated phase change materials based on n-octadecane core and resorcinol-modified melamine-formaldehyde shell" Colloid and surfaces A: Physicochemical and Engineering Aspects Bd. 332, 12. September 2008 (2008-09-12), XP002559596 Gefunden im Internet: URL:www.sciencedirect.com> [gefunden am 2009-12-08]

## Beschreibung

Die vorliegende Erfindung betrifft ein Verfahren zur Stabilisierung wässriger Dispersionen von Mikrokapseln, welche durch Kondensation von Melamin-Formaldehyd-Vorkondensaten und/oder deren C₁-C₄-Alkylethern in Gegenwart eines Schutzkolloids erhältlich ist, durch Zugabe von Tensid. Sie betrifft ferner stabilisierte Dispersionen von Mikrokapseln, die nach solchem Verfahren erhältlich sind. Sie betrifft ferner die Verwendung der stabilisierten Dispersionen von Mikrokapseln zur Herstellung von Wasch- oder Reinigungsmitteln. Sie betrifft ferner die Verwendung von Tensid zur Stabilisierung von Mikrokapseldispersionen auf Basis von Melamin-Formaldehyd-Harzen. Sie betrifft ferner ein Verfahren zur Herstellung eines Mikrokapseln enthaltenden Wasch- oder Reinigungsmittels.

Der Einsatz von Mikrokapseln, insbesondere von riechstoffhaltigen Mikrokapseln in Wasch- oder Reinigungsmitteln, kann dazu dienen, dem Verbraucher eine verbesserte Leistung, z.B. ein verbessertes Dufterlebnis bei der Anwendung seiner Wasch- oder Reinigungsmittelprodukte zu ermöglichen. Riechstoffhaltige Mikrokapseln auf Basis von Melamin-Formaldehyd-Harzen zeichnen sich zum Beispiel dadurch aus, dass sie wasserunlöslich sind, aber durch Einwirken mechanischer Kräfte, z.B. infolge von Reibung, gezielt ihren Inhalt freisetzen und somit für Wohlgeruch weit nach der eigentlich Wasch- oder Reinigungsanwendung sorgen können.

Die Herstellung entsprechender wässriger Dispersionen von Melamin-Formaldehyd-Mikrokapseln durch säureinduzierte Kondensation von Melamin-Formaldehyd-Vorkondensaten und/oder deren C₁-C₄-Alkylethern in Gegenwart eines Schutzkolloids ist an sich bekannt und z.B. in den Druckschriften US 4,406,816 sowie der US 2003/0125222 A1 sowie der US 2003/0004226 A1 (alle BASF) beschrieben. Die WO 2006/018694 offenbart die Stabilisierung von parfümhaltigen Aminoplastkapsel dispersionen durch Zugabe von Polymeren.

Es wurde nun eine Problematik gefunden die darin besteht, dass solche Wässrigen Dispersionen von Melamin-Formaldehyd-Mikrokapseln, insbesondere von riechstoffhaltigen Melamin-Formaldehyd-Mikrokapseln, ein instabiles Verhalten aufweisen.

Solche Dispersionen sind nach dem Aufrühren kurze Zeit niedrigviskos, trennen sich dann aber in eine sehr hochviskose, nahezu schnittfeste Ober- und eine niedrigviskose Unterphase auf. In diesem Zustand sind sie weder pump- noch versprühbar. Im Kontext der vorliegenden Erfindung soll dieses Phänomen als reversible Flockulation bezeichnet werden. Eine Stabilisierung der Dispersionen durch Zusatz von Verdickungsmitteln war nicht möglich.

Aufgabe der vorliegenden Erfindung war es vor diesem Hintergrund, die Bereitstellung wässriger Dispersionen von (vorzugsweise riechstoffhaltigen) Melamin-Formaldehyd-Mikrokapseln zu ermöglichen, welche die zuvor genannte Problematik nicht aufweisen, also über eine verbesserte Lagerstabilität und Prozessierbarkeit verfügen.

Diese Aufgabe wird gelöst durch den Gegenstand der Erfindung, nämlich ein Verfahren zur Stabilisierung wässriger Dispersionen von (vorzugsweise riechstoffhaltigen) Mikrokapseln, welche durch (vorzugsweise säureinduzierte) Kondensation von Melamin-Formaldehyd-Vorkondensaten und/oder deren C₁-C₄-Alkylethern in Gegenwart eines (vorzugsweise anionischen) Schutzkolloids erhältlich sind, durch Zugabe von Tensid. Es konnte überraschend gefunden werden, dass die Tensidzugabe zu einer Verbesserung der Lagerstabilität und Prozessierbarkeit bzw. Weiterverarbeitbarkeit führt.

Bevorzugt einsetzbare Tenside im Sinne der vorliegenden Erfindungen sind nichtionische, kationische und anionische Tenside. Anionische Tenside können vorteilhafterweise in Mengen von 1 bis 40 Gew.-%, z.B. 2 bis 30 Gew.-%, insbesondere 3 bis 20 Gew.-% zur Stabilisierung der Dispersionen eingesetzt werden. Kationische Tenside können vorteilhafterweise in Mengen von 0,001 bis 4 Gew.-%, beispielsweise 0,01 bis 3 Gew.-% und insbesondere 0,1 bis 2 Gew.-% zur Stabilisierung der Dispersionen eingesetzt werden. Nichtionische Tenside können vorteilhafterweise in Mengen von 0,01 bis 20 Gew.-%, beispielsweise 0,1 bis15 Gew.-%, insbesondere 1 bis 10 Gew.-% zur Stabilisierung der Dispersionen eingesetzt werden. Geeignete anionische Tenside sind z.B. Alkylbenzolsulfonate, vorzugsweise sekundäres C10-C13-n-Alkylbenzolsulfonat, Alkansulfonate, Methylestersulfonate, α-Olefinsulfonate, Alkylsulfate, vorzugsweise Fettalkoholsulfat, Alkylethersulfate, vorzugsweise Fettalkoholethersulfat und Sulfosuccinate. Geeignete kationische Tenside sind z.B. quartäre Ammonium-Verbindungen, insbesondere quartäre Ammonium-Verbindungen mit einem oder zwei hydrophoben Alkyl-Resten, quartäre Phosphonium-Salze oder tertiäre Sulfonium-Salze. Besonders bevorzugt sind sogenannte Esterquats. Esterquat ist die Sammelbezeichnung für kationische grenzflächenaktive Verbindungen mit vorzugsweise zwei hydrophoben Gruppen, die über Ester-Bindungen mit einem quaternierten Di(Tri-)ethanolamin oder einer analogen Verbindung verknüpft sind.

Der Einsatz nichtionischer Tenside zur erfindungsgemäßen Stabilisierung wässriger Mikrokapseldispersionen hat sich als besonders vorteilhaft erwiesen. Mit Vorteil einsetzbar sind insbesondere Fettalkoholethoxylate, Oxoalkoholethoxylate, Alkylphenolpolyglycolether, Fettsäureethoxylate, Fettaminethoxylate, ethoxylierte Triacylglycerole und Mischether (beidseitig alkylierte Polyethylenglycolether) sowie Alkylpolyglucoside, Saccharoseester, Sorbitanester, Fettsäureglucamide sowie Aminoxide. Diese und weitere einsetzbare nichtionische Tenside werden weiter unten im Zusammenhang mit der Beschreibung erfingunsgemäßer Wasch- und Reinigungsmittel zum Teil noch genauer beschrieben.

Besonders aber der Einsatz von Oxoalkoholethoxylaten ist vorteilhaft hinsichtlich der gewünschten Stabilisierung der wässrigen Mikrokapseldispersionen. Diese ermöglichen die besten Ergebnisse im Sinne der Erfindung. Bevorzugte Oxoalkoholethoxylate leiten sich von Oxoalkoholen mit 9 bis 15 Kohlenstoffatomen ab, an die vorzugsweise 3 bis 15 Mol Ethylenoxid angelagert sind. Ein besonders bevorzugtes Oxoalkoholethoxylat im Sinne der Erfindung ist C₁₃-C₁₅-Oxoalkohol, an welchen 7 Mol Ethylenoxid angelagert sind. Ein geeignetes Handelsprodukt ist z.B. Lutensol® AO 7 von der BASF. Durch den Einsatz von Oxoalkoholethoxylaten kann die reversible Flockulation völlig zurückgedrängt werden.

Die zu stabilisierenden Mikrokapseldispersionen sind ganz allgemein durch Kondensation eines (gegebenenfalls teilmethylierten) Melamin-Formaldehyd-Harzes in Wasser, in dem ein im Wesentlichen wasserunlösliches, den Kapselkern bildendes Material, vorzugsweise umfassend Riechstoffe, dispergiert ist, in Gegenwart eines Schutzkolloids herstellbar. Dabei kommt es gewöhnlich zu einer Präformierung der Mikrokapseln, an die sich in der Regel eine Härtung der Kapselwand anschließt. Die Präformierung findet bevorzugt bei kleineren pH-Werten, wie pH-Werten von z.B. 3 bis 6,5, statt und die Härtung wird anschließend in der Regel durch eine Temperaturerhöhung ausgelöst.

Bevorzugt ist ein erfindungsgemäßes Verfahren zur Stabilisierung einer wässriger Dispersionen von Mikrokapseln, bei dem (a) eine wässrige Dispersionen von Mikrokapseln durch Kondensation eines vorzugsweise teilmethylierten Melamin-Formaldehyd-Harzes, vorzugsweise mit einem Molverhältnis von Melamin : Formaldehyd : Methanol von 1:3,0:2,0 bis 1:6,0:4,0, in Wasser, in welchem das im Wesentlichen wasserunlösliche, den Kapselkern bildende Material, vorzugsweise umfassend Riechstoffe, dispergiert ist, in Gegenwart eines Schutzkolloids bei pH Werten von vorzugsweise 3 bis 6,5 durch Präformierung der Mikrokapseln bei einer Temperatur von vorzugsweise 20 bis 50 °C und anschließender Härtung der Kapselwand bei vorzugsweise > 50 bis 100 °C hergestellt wird und (b) anschließend ein Tensid, vorzugsweise Niotensid, insbesondere Oxoalkoholethoxylat, zur Stabilisierung der Dispersion zugegeben wird. Dies entspricht einer bevorzugten Ausführungsform der Erfindung und ermöglicht die Bereitstellung von Mikrokapseldispersionen, bei welchen das Phänomen der reversiblen Flockulation völlig unterdrückt wird.

Ein im Sinne der Erfindung besonders bevorzugtes teilmethyliertes Melamin-Formaldehyd-Harz, welches als Ausgangsstoff für das Wandmaterial der Mikrokapseln eingesetzt werden kann, weist ein definiertes Molverhältnis von Melamin: Formaldehyd: Methanol von bevorzugt 1: 3,5:2,2 bis 1:4,5:2,8 und insbesondere etwa 1:3,9:2,4 auf.

Die Molverhältnisse von Melamin: Formaldehyd:Methanol des zur Kapselherstellung verwendeten Melamin-Formaldehyd-Harzes haben Einfluss auf die resultierende Viskosität der Kapseldispersion. Bei den angegebenen Molverhältnissen erhält man eine vorteilhafte Kombination von Feststoffgehalt und Viskosität der Mikrokapseldispersionen. Diese Mikrokapseldispersionen lassen sich durch die erfindungsgemäße Tensidzugabe, vorzugsweise Niotensid-Zugabe, insbesondere Oxoalkoholethoxylat-Zugabe, sehr gut stabilisieren.

Das erfindungsgemäße Verfahren kann also prinzipiell so durchgeführt werden, dass man das einzukapselnde Kernmaterial, umfassend Riechstoffe, das (vorzugsweise teilmethylierte) Melamin-Formäldehyd-Harz, das Schutzkolloid und Wasser zu einer Vormischung vereinigt, die Vormischung mit einer Säure, wie vorzugsweise Ameisensäure, auf einen pH-Wert von vorteilhafterweise 3 bis 6,5, vorzugsweise 3,8 bis 5,0, insbesondere etwa 4,5, einstellt und die Vormischung zur Dispergierung des Kernmaterials scherenden Bedingungen aussetzt. Bei einer Temperatur im Bereich von 20 bis 50 °C, bevorzugt etwa 35 °C, präformieren sich dann die Mikrokapseln, d. h. es bildet sich um die dispergierten Tröpfchen des Kernmaterials eine Wand von weitgehend unvernetztem Melamin-Formaldehyd-Harz. Anschließend wird die Temperatur erhöht, um die Kapselwand der Mikrokapseln durch Ausbildung von Vernetzungen zu härten. Die Aushärtung der Kapselwand kann bereits oberhalb von 50 °C beobachtet werden. Bevorzugt werden jedoch 65 °C und insbesondere bevorzugt 75 °C als untere Grenze des Temperaturbereichs zum Aushärten gewählt. Da es sich um eine wässrige Dispersion handelt, soll die Härtung bei Temperaturen unterhalb von 100 °C, bevorzugt unterhalb von 95°C und besonders bevorzugt unterhalb von 90 °C als oberer Temperaturgrenze durchgeführt werden. Diese wässrigen Mikrokapseldispersionen werden danach durch die Tensidzugabe, vorzugsweise Niotensid-Zugabe, insbesondere Oxoalkoholethoxylat-Zugabe, stabilisiert.

Je nach pH-Wert der Dispersion erfolgt die Härtung unterschiedlich rasch, wobei Dispersionen bei niedrigeren pH-Werten zwischen 3 und 5 besonders gut aushärten. Oberhalb von 50 °C ist jedoch auch im schwach sauren bis neutralen pH-Bereich die Härtung deutlich zu beobachten.

Die Dispergierung des Kernmaterials erfolgt je nach der Größe der herzustellenden Kapseln in bekannter Weise, wie es z.B. in der US 4,406,816 beschrieben ist. Kleine Kapseln, insbesondere wenn die Kapselgröße unterhalb von 50 µm liegen soll, können Homogenisier- oder Dispergiermaschinen erfordern, wobei Geräte mit oder ohne Zwangsdurchlaufvorrichtung eingesetzt werden können. Die Homogenisier- oder Dispergiermaschinen sollten zu Beginn der Präformierungsphase eingesetzt werden. Während der Härtungsphase sollte die Dispersion dagegen lediglich zur gleichmäßigen Durchmischung unter niedrigscherenden Bedingungen durchmischt oder umgewälzt werden.

Ein Erwärmen der Kapseldispersion auf die Härtungstemperatur kann auf verschiedene Weise erfolgen. In einer bevorzugten Ausführungsform wird heißer Wasserdampf in die Kapseldispersion injiziert. Die Temperatur des Wasserdampfs beträgt z. B. 105 bis 120 °C und der Druck 1,5 bis 3 bar. Es ist dabei zu berücksichtigen, dass durch das Kondensat der Feststoffgehalt der Dispersion etwas erniedrigt wird.

In dem erfindungsgemäßen Verfahren besonders bevorzugt einsetzbare Schutzkolloide sind insbesondere Alkalimetallsalze eines Homo- oder Copolymers von 2-Acrylamido-2-methylpropansulfonsäure, insbesondere das Natriumsalz. Als mögliche Comonomere sind z.B. Acrylsäure, Methacrylsäure, C₁₋₃-Alkyl(meth)acrylate, Hydroxy-C₂₋₄-(meth)acrylate und/oder N-Vinylpyrrolidon geeignet. Das Copolymer enthält vorzugsweise wenigstens 40 Gew.-% 2-Acrylamido-2-methylpropansulfonsäure-Einheiten. Geeignete Homo- und Copolymere sind z.B. in US 5,422,176 beschrieben. Das Schutzkolloid hat vorzugsweise einen K-Wert nach Fikentscher von 100 bis 170 oder eine Viskosität von 200 bis 5000 mPas (gemessen in 20 Gew.-%iger wässriger Lösung bei 23 °C in einem Brookfield-Gerät RVT Spindel 3, bei 50 Upm). Besonders bevorzugt sind Polymere mit einem K-Wert von 115 bis 150 bzw. solche, deren Viskosität 400 bis 4000 mPas beträgt.

Das Gewichtsverhältnis von Melamin-Formaldehyd-Harz zu Schutzkolloid beträgt vorzugsweise 3:1 bis 4,5:1, insbesondere 3,5:1 bis 4,0:1. Durch das Verhältnis von Harz zu Schutzkolloid und die Art des Schutzkolloids kann die Kapselgröße und die Kapselgrößenverteilung beeinflusst werden.

In einer bevorzugten Ausführungsform der Erfindung kann nach Erreichen der Härtungstemperatur Melamin portionsweise oder kontinuierlich zur Mikrokapseldispersion gegeben werden. Eine kontinuierliche Zugabe ist bevorzugt. Die zugegebene Menge an Melamin kann 5 bis 100 Gew.-%, vorzugsweise 7 bis 40 Gew.-%, insbesondere 12,5 bis 35 Gew.-%, bezogen auf das Melamin-Formaldehyd-Harz betragen. Das Melamin kann vorteilhafterweise in Form einer wässrigen Aufschlämmung, deren pH-Wert vorzugsweise mit einer Säure, wie z. B. mit Ameisensäure, auf 3,8 bis 5,0, vorzugsweise etwa 4,5, eingestellt ist und die z. B. einen Trockengehalt von 15 bis 80 Gew.-%, vorzugsweise 25 bis 70 Gew.-%, aufweist, zugegeben werden. Die mittlere Teilchengröße der Melaminteilchen in der Aufschlämmung beträgt vorzugsweise 1 bis 50 µm, insbesondere etwa 1 bis 5 µm. Die mittlere Teilchengröße kann mit einem Malvern Sizer ermittelt werden.

Ein bevorzugtes erfindungsgemäßes Verfahren zeichnet sich also dadurch aus, dass während der Härtung der Kapselwand portionsweise oder kontinuierlich 5 bis 100 Gew.-% Melamin, bezogen auf das Melamin-Formaldehyd-Harz, zugegeben werden, wobei das Melamin vorzugsweise auch in Form einer Mischung aus Melamin und Harnstoff zugegeben werden kann.

Das erfindungsgemäße Verfahren kann z.B. so durchgeführt werden, dass man während der Härtung ein Gemisch von Melamin und Harnstoff, z. B. mit einem Gewichtsverhältnis von 20:1 bis 1:20, vorzugsweise 5:1 bis 1:1 zusetzt, vorteilhafterweise in Form einer wässrigen Melamin-Aufschlämmung, die den Harnstoff gelöst enthält.

Es ist auch möglich und ebenfalls bevorzugt, wenn während der Härtung der Mikrokapseldispersion eine Mischung aus Calciumsalz und Melamin portionsweise oder kontinuierlich zugeführt wird. Bevorzugt können Gemische enthaltend Calciumsalz und Melamin in einem Gewichtsverhältnis von 20:1 bis 1:20, vorzugsweise 1:1 bis 1:10 zugeführt werden.

Das erfindungsgemäße Verfahren kann daher mit Vorteil so durchgeführt werden, dass man während der Härtung ein Gemisch von Calciumsalz, Harnstoff und Melamin, z. B. mit einem Gewichtsverhältnis von 1:1:3 bis 1:10:15, vorzugsweise 1:2:4 bis 1:6:10 zusetzt, vorteilhafterweise in Form einer wässrigen Calciumsalz-Melamin-Aufschlämmung, die den Harnstoff gelöst enthält. Bevorzugt kann nach der Härtung auch eine Nachhärtung durchgeführt werden, indem man die Dispersion mit einer wässrigen Base, vorzugsweise Natronlauge neutralisiert oder basisch stellt, vorzugsweise auf einen pH-Wert im Bereich von 9 - 12 vorzugsweise im Bereich von 10 bis 11,5.

Wenn die erfindungsgemäß zu stabilisierende Mikrokapseldispersion, vorzugsweise Dispersion riechstoffhaltiger Mikrokapseln, einen Feststoffgehalt von wenigstens 15 Gew.-%, vorteilhafterweise wenigstens 20 Gew.-%, vorteilhafter wenigstens 25 Gew.-%, weiter vorteilhaft wenigstens 30 Gew.-%, vorzugsweise wenigstens 35 Gew.-% und insbesondere wenigstens 40 Gew.- % aufweiset, Gew.-% bezogen auf die zu stabilisierende Mikrokapseldispersion, so liegt eine bevorzugten Ausführungsform der Erfindung vor. Eine mögliche Obergrenze für den Feststoffgehalt kann bei 60 Gew.-%, vorzugsweise 55 Gew.-%, insbesondere 50 Gew.-% liegen, Gew.-% bezogen auf die zu stabilisierende Mikrokapseldispersion. Solche Feststoffgehalte führen zu besonders vorteilhaften Ergebnissen im Hinblick auf die erfindungsgemäß angestrebte Stabilisierung der Mikrokapseldispersionen. Der Feststoffgehalt kann nach Abtrennung von der Flüssigkeit, also des Wassers, z.B. durch Filtration, in üblicher Weise durch Wägungen erfolgen, insbesondere mit einer Feststoffwaage.

Eine weitere bevorzugten Ausführungsform der Erfindung liegt vor, wenn die erfindungsgemäß zu stabilisierende Mikrokapseldispersion einen Wassergehalt von wenigstens 30 Gew.-%, vorteilhafterweise wenigstens 40 Gew.-%, vorzugsweise wenigstens 45 Gew.-% und insbesondere wenigstens 50 Gew.- % aufweist, Gew.% bezogen auf die zu stabilisierende Mikrokapseldispersion. Eine mögliche Obergrenze für den Wassergehalt kann bei 70 Gew.-%, vorzugsweise 65 Gew.-%, insbesondere 60 Gew.-% liegen. Solche Wassergehalte führen zu besonders vorteilhaften Ergebnissen im Hinblick auf die erfindungsgemäß angestrebte Stabilisierung der Mikrokapseldispersionen.

Wenn die Mikrokapseln riechstoffhaltig sind, wobei der Anteil der in den Mikrokapseln enthaltenden Riechstoffe (Riechstoffgehalt) bezogen auf die gesamte zu stabilisierende Mikrokapseldispersion > 15 Gew.-%, vorteilhafterweise > 20 Gew.-%, vorzugsweise > 25 Gew.-%, insbesondere > 30 Gew.-% beträgt, so liegt ebenfalls eine bevorzugte Ausführungsform der Erfindung vor. Eine mögliche Obergrenze für den Anteil der Riechstoffe kann bei 50 Gew.-%, vorzugsweise 45 Gew.-%, insbesondere 40 Gew.-% liegen. Solche Riechstoffgehalte führen zu besonders vorteilhaften Ergebnissen im Hinblick auf die erfindungsgemäß angestrebte Stabilisierung der Mikrokapseldispersionen.

Der mittlere Durchmesser der Mikrokapseln kann vorzugsweise im Bereich von 1 bis 500 µm liegen. Eine bevorzugte Ausführungsform der Erfindung liegt vor, wenn der mittlere Durchmesser der Mikrokapseln im Bereich von 1 bis 100 µm liegt, vorzugsweise im Bereich von 5-80 µm, vorteilhafterweise 10-50 µm, insbesondere im Bereich von 15 - 40µm liegt.

Dabei ist es bevorzugt, dass der D90-Wert der Teilchengrößenverteilung der Mikrokapseln < 70 µm, bevorzugt < 60 µm, besonders bevorzugt < 50 µm beträgt. Der D90-Wert der Teilchengrößenverteilung ist der Wert, bei dem 90% aller Teilchen kleiner und 10% der Teilchen größer als dieser Wert sind.

Insbesondere sind Mikrokapseln bevorzugt, welche einen mittleren Durchmesser von ungefähr 20 µm bis ungefähr 30 µm aufweisen. Solche Mikrokapseln führen zu besonders vorteilhaften Ergebnissen im Hinblick auf die erfindungsgemäß angestrebte Stabilisierung der Mikrokapseldispersionen.

Besonders bevorzugt ist es, wenn das Verhältnis von Wandstärke zum Durchmesser der Mikrokapseln im Bereich von 0,005 bis 0,1 liegt. Solche Mikrokapseln und deren Herstellung werden z.B. in US 20030125222 A1 beschrieben. Dies entspricht einer bevorzugten Ausführungsform der Erfindung.

Ganz besonders vorteilhafte Ergebnisse im Hinblick auf die erfindungsgemäß angestrebte Stabilisierung der Mikrokapseldispersionen können erreicht werden, wenn die zuvor genannten Kriterien für Feststoffgehalt, Wassergehalt, Riechstoffgehalt, mittlere Durchmesser der Mikrokapseln sowie Verhältnis von Wandstärke zum Durchmesser der Mikrokapseln allesamt erfüllt sind.

In dem erfindungsgemäßen Verfahren wird der pH-Wert der Mikrokapseldispersion vor der Zugabe des Tensides auf einen Wert von 7 bis 10, vorzugsweise 7,5 - 9 eingestellt. Solche pH-Werte führen zu besonders vorteilhaften Ergebnissen im Hinblick auf die erfindungsgemäß angestrebte Stabilisierung der Mikrokapseldispersionen.

Ein weiterer Gegenstand der vorliegenden Erfindung ist eine stabilisierte Dispersion von (vorzugsweise riechstoffhaltigen) Mikrokapseln, erhältlich nach einem Verfahren wie zuvor beschrieben. Eine solche stabilisierte Dispersion zeichnet sich dadurch aus, dass sie rheologisch langzeitstabil ist und keine reversible Flockulation auftritt.

Ferner sind diese stabilisierten Dispersionen sehr gut pump- und sprühbar. Sie sind auch sehr gut weiterverarbeitbar, auch in dem Sinne, dass sie sehr stabil in Wasch- und Reinigurigsmittel eingearbeitet werden können. Die dabei resultierenden Wasch- und Reinigungsmittel führen zu sehr guten Duftergebnissen, welche bei Anwesenheit riechstoffhaltiger Mikrokapseln resultieren.

Ein weiterer Gegenstand der vorliegenden Erfindung liegt daher in der Verwendung der stabilisierten Dispersionen von (vorzugsweise riechstoffhaltigen) Mikrokapseln zur Herstellung von Wasch- oder Reinigungsmitteln.

Ebenso liegt ein weiterer Gegenstand der vorliegenden Erfindung in der Verwendung von Tensid zur Stabilisierung von Mikrokapseldispersionen (vorzugsweise Dispersionen riechstoffhaltiger Mikrokapseln) auf Basis von Melamin-Formaldehyd-Harzen.

Als Tensid kann dabei kationisches, anionisches und/oder nichtionisches Tensid eingesetzt werden, vorzugsweise aber nichtionisches Tensid, insbesondere Oxoalkoholethoxylat, wie bereits zuvor beschrieben.

Besonders bevorzugt ist eine erfindungsgemäße Verwendung, welche sich dadurch auszeichnet, dass man nach einem Verfahren zur Herstellung von Mikrokapseldispersionen, bei welchem durch die Kondensation eines vorzugsweise teilmethylierten Melamin-Formaldehyd-Harzes in Wasser, in dem das im Wesentlichen wasserunlösliche, den Kapselkern bildende Material, vorzugsweise umfassend Riechstoffe, dispergiert ist, in Gegenwart eines Schutzkolloids, durch Präformierung der Mikrokapseln und anschließender Härtung der Kapselwand eine Mikrokapseldispersion erzeugt wird, ein Tensid, vorzugsweise nichtionisches Tensid, insbesondere ein Oxoalkoholethoxylat, zur Stabilisierung der erhaltenen Mikrokapseldispersionen einsetzt. Dies entspricht einer bevorzugten Ausführungsform der Erfindung.

Ebenso ist eine erfindungsgemäße Verwendung besonders bevorzugt, welche sich dadurch auszeichnet, dass man nach einem Verfahren zur Herstellung von Mikrokapseln, bei welchem durch Kondensation eines vorzugsweise teilmethylierten Melamin-Formaldehyd-Harzes, vorzugsweise mit einem Molverhältnis von Melamin : Formaldehyd : Methanol von 1:3,0:2,0 bis 1:6,0:4,0, in Wasser, in dem das im Wesentlichen wasserunlösliche, den Kapselkern bildende Material, vorzugsweise umfassend Riechstoffe, dispergiert ist, in Gegenwart eines Schutzkolloids bei pH Werten von vorzugsweise 3 bis 6,5 durch Präformierung der Mikrokapseln bei einer Temperatur von vorzugsweise 20 bis 50 °C und anschließender Härtung der Kapselwand bei vorzugsweise > 50 bis 100 °C eine Mikrokapseldispersion erzeugt wird, ein Tensid, vorzugsweise nichtionisches Tensid, insbesondere ein Oxoalkoholethoxylat, zur Stabilisierung der erhaltenen Mikrokapseldispersionen einsetzt. Dies entspricht einer bevorzugten Ausführungsform der Erfindung.

Ein weiterer Gegenstand der vorliegenden Erfindung liegt in einem Verfahren zur Herstellung eines (vorzugsweise riechstoffhaltige) Mikrokapseln enthaltenden Wasch- oder Reinigungsmittels, bei welchem man ein Wasch- oder Reinigungsmittel mit einer (vorzugsweise riechstoffhaltigen) Mikrokapseldispersion, wie zuvor beschrieben, vermengt. Die Mikrokapseldispersion kann dabei vorzugsweise in Mengen von 0,001 bis 5 Gew.-%, z.B. in Mengen von 0,01 bis 1,5 Gew.-%, bezogen auf das resultierende Wasch- oder Reinigungsmittel, eingearbeitet werden. Das resultierende Wasch- oder Reinigungsmittel kann je nach Wunsch fest oder flüssig sein.

Besonders vorteilhaft sind die stabilisierten Mikrokapseldispersionen bei der Herstellung von flüssigen Weichspülern. Ein erfindungsgemäßes Verfahren, bei welchem man einen flüssigen Weichspüler mit einer Mikrokapseldispersion, wie zuvor beschrieben, vermengt, vorzugsweise durch Einrühren der Mikrokapseldispersion in die Weichspülermatrix oder durch kontinuierliche Zugabe in einen flüssigen Weichspüler und Vermischen über statische Mischelemente, entspricht daher einer bevorzugten Ausführungsform der Erfindung.

Besonders vorteilhaft sind die stabilisierten Mikrokapseldispersionen auch bei der Herstellung von flüssigen Wasch- oder Reinigungsmitteln. Ein erfindungsgemäßes Verfahren, bei weichem man ein flüssiges Wasch- oder Reinigungsmittel mit einer Mikrokapseldispersion, wie zuvor beschrieben, vermengt, vorzugsweise durch Einrühren der Mikrokapseldispersion in die Matrix oder durch kontinuierliche Zugabe in flüssige Wasch- und Reinigungsmittel und Vermischen über statische Mischelemente, entspricht daher einer bevorzugten Ausführungsform der Erfindung.

Besonders vorteilhaft sind die stabilisierten Mikrokapseldispersionen auch bei der Herstellung von festen Wasch- oder Reinigungsmitteln. Ein erfindungsgemäßes Verfahren, bei welchem man ein festes Wasch- oder Reinigungsmittel mit einer Mikrokapseldispersion, wie zuvor beschrieben, vermengt, z.B. durch Aufsprühen der Mikrokapseldispersion auf die feste Wasch- oder Reinigungsmittelmatrix bzw. auf Wasch- oder Reinigungsmittelgranulate, entspricht daher einer bevorzugten Ausführungsform der Erfindung.

Besonders vorteilhaft ist auch ein Verfahren zur Herstellung eines festen Wasch- oder Reinigungsmittels, bei dem die Mikrokapseldispersion vor dem Vermischen mit einem Wasch- oder Reinigungsmittel granuliert wird.

Im Hinblick auf feste Mittel ist auch ein Verfahren zur Herstellung von Partikeln möglich, umfassend
(a) die Herstellung einer Mischung aus Mikrokapseln und thermoplastischen Polymer, wie vorzugsweise PEG, PVA, Polyacrylat, PVP oder Polyester in Form einer die Mikrokapseln enthaltenden Schmelze
(b) die Vermengung der Schmelze aus Schritt (a) mit wasserlöslichem oder wasserdispergierbarem Trägermaterial. Dabei können in dem Schritt (a) die Mikrokapseln in Form der Mikrokapseldispersion zusammen mit wasserbindenden Substanzen in die Schmelze eingemischt werden.

Die erfindungsgemäßen Mikrokapseln können neben oder anstelle von Riechstoffen auch andere Inhaltsstoffe umfassen, obwohl bevorzugt ist, dass sie Riechstoffe, insbesondere nur Riechstoffe umfassen. Insbesondere können die Mikrokapseln auch Aktivstoffe enthalten, welche für Wasch-, Reinigungs-, Pflege- und/oder Veredelungszwecke geeignet sind, insbesondere
(a) Textilpflegestoffe, wie vorzugsweise Silikonöle, kationische Polymere, und/oder
(b) Hautpflegestoffe, wie vorzugsweise Vitamin E, natürliche Öle, Aloe-Vera-Extrakt, Grüner-Tee-Extrakt, D-Panthenol, Plankton Extrakt, Vitamin C, Harnstoff, Glycin und/oder kosmetische Öle. Besonders geeignet ist der Einsatz von Aloe-Vera-Öl, insbesondere in Kombination mit Riechstoffen.

Im Sinne eines aromatherapeutischen Effektes können erfindungsgemäß auch etherische Öle in den Mikrokapseln enthalten sein. Bevorzugte etherische Öle sind z.B. Patchouli - Pogostemon patschuli, Salbei - Salvia officinalis, Schachtelhalm - Equisetaceae, Teebaum - Melaleuca alternifolia, Weihrauch (Olibanum) - Boswellia carteri. Der Einsatz von etherischen Ölen entspricht einer bevorzugten Ausführungsform der Erfindung.

Der Einsatz von Duftstoffvorläufern in den erfindungsgemäßen Mikrokapseln ist ebenfalls sehr vorteilhaft. Ein Duftstoffvorläufer ist eine Verbindung, welche durch das Aufbrechen einer chemischen Bindung, z.B. durch Hydrolyse, ein erwünschtes Geruchs- und/oder Duftstoffmolekül freisetzt. Typischerweise wird zur Bildung eines Duftstoffvorläufers ein gewünschtes Duftstoffrohmaterial chemisch mit einem Träger, vorzugsweise einem geringfügig flüchtigen oder mäßig flüchtigen Träger, verbunden. Die Kombination führt zu einem weniger flüchtigen und stärker hydrophoben Duftstoffvorläufer mit verbesserter Anlagerung auf Stoffen. Der Duftstoff wird danach durch Aufbrechen der Bindung zwischen dem Duftstoffrohmaterial und dem Träger freigesetzt, z.B. durch eine Veränderung des pH-Werts (z. B. durch Transpiration beim Tragen), Luftfeuchtigkeit, Wärme und/oder Sonnenlicht während der Lagerung oder des Trocknens auf der Wäscheleine. Das Duftstoffrohmaterial für Verwendung in Duftstoffvorläufern sind typischerweise gesättigte oder ungesättigte, flüchtige Verbindungen, die einen Alkohol, einen Aldehyd und/oder eine Ketongruppe enthalten. Zu den hierin nützlichen Duftstoffrohmaterialien gehören jegliche wohlriechenden Substanzen oder Mischungen von Substanzen.

Besondere vorteilhafte, erfindungsgemäß einsetzbare Duftstoffvorläufer gehorchen der Formel 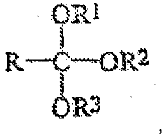 worin R Wasserstoff, lineares C1-C8-Alkyl, verzweigtes C3-C20-Alkyl, cyclisches C3-C20-Alkyl, verzweigtes cyclisches C6-C20-Alkyl, lineares C6-C20-Alkenyl, verzweigtes C6-C20-Alkenyl, cyclisches C6-C20-Alkenyl, verzweigtes cyclisches C6-C20-Alkenyl, substituiertes oder unsubstituiertes C6-C20-Aryl und Mischungen hiervon bedeutet; R¹, R² und R³ unabhängig lineares, verzweigtes oder substituiertes C1-C20-Alkyl; lineares, verzweigtes oder substituiertes C2-C20-Alkenyl; substituiertes oder unsubstituiertes, cyclisches C3-C20-Alkyl; substituiertes oder unsubstituiertes C6-C20-Aryl, substituiertes oder unsubstituiertes C2-C40-Alkylenoxy; substituiertes oder unsubstituiertes C3-C40-Alkylenoxyalkyl; substituiertes oder unsubstituiertes C6-C40-Alkylenaryl; substituiertes oder unsubstituiertes C6-C32-Aryloxy; substituiertes oder unsubstituiertes C6-C40-Alkylenoxyaryl; C6-C40-Öxyalky-lenaryl und Mischungen hiervon bedeuten. Der Einsatz solcher Substanzen in den erfindungsgemäßen Mikrokapseln entspricht einer bevorzugten Ausführungsform der Erfindung.

Besonders bevorzugt ist es, wenn die eingesetzten Riechstoffe Kieselsäureester-Mischungen umfassen, welche Kieselsäureester der Formeln 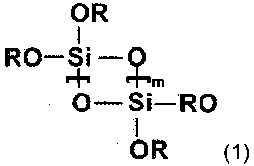 und 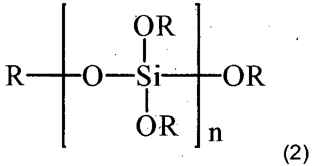 enthalten, wobei alle R unabhängig voneinander ausgewählt sind aus der Gruppe, die H, die geradkettigen oder verzweigten, gesättigten oder ungesättigten, substituierten oder unsubstituierten C1-6-Kohlenwasserstoffreste und die Duftstoffalkoholreste und/oder Biozidalkoholreste enthält, und m Werte aus dem Bereich 1 bis 20 und n Werte aus dem Bereich 2 bis 100 annimmt. Vorzugsweise enthalten die Kieselsäureester der Formeln (1) und (2) jeweils zumindest einen Duftstoffalkoholrest und/oder Biozidalkoholrest.

Die Kieselsäureester-Mischungen können in den Mikrokapseln enthalten sein. Wenn die Kieselsäureester-Mischungen in den Mikrokapseln vorzugsweise mindestens 2 Gew.-% der gesamten verkapselten Riechstoffmenge ausmachen, Gew.-% bezogen auf die Menge der verkapselten Riechstoffe, so liegt eine bevorzugte Ausführungsförm der Erfindung vor.

Die Kieselsäureester-Mischungen können insbesondere unverkapselt zum Einsatz gelangen. Es konnte überraschend gefunden werden, dass die Anwesenheit der Kieselsäureester-Mischungen dazu führt, dass der erzielbare Dufteindruck, sowohl was Gefallen als auch Intensität anbetrifft, weiter verbessert werden kann. Der Dufteindruck ist nicht nur qualitativ, d.h. das Gefallen anbetreffend, besser, sondern hält auch länger an.

Besonders geeignete Duftstoffvorläufer sind Reaktionsprodukte von Verbindungen, die mindestens eine primäre und/oder sekundäre Amingruppe umfassen, z.B. einem aminofunktionellen Polymer, insbesondere einem aminofunktionellen Silikon, und einem Duftstoffbestandteil, der aus Keton, Aldehyd und Mischungen davon ausgewählt ist. Der Einsatz solcher Substanzen, insbesondere in den erfindungsgemäßen Mikrokapseln, entspricht einer bevorzugten Ausführungsform der Erfindung.

Die erfindungsgemäßen Mikrokapseln können im Kern mit Silikonöl auch Textilpflegestoffe umfassen, um auf diese Weise eine Bereitstellung von Wasch- oder Reinigungsmitteln mit besonders guten textilpflegenden Eigenschaften zu ermöglichen. Die Anwesenheit des Silikonöls trägt zu einer Verbesserung eines angestrebten Wohlgeruchseffekts bei.

Wenn es sich bei dem erfindungsgemäßen Wasch- oder Reinigungsmittel um ein flüssiges Mittel handelt, was einer bevorzugten Ausführungsform der Erfindung entspricht, so beträgt darin der Wassergehalt vorteilhafterweise > 25 Gew.- %, vorzugsweise > 50 Gew.-%, in weiter vorteilhafter Weise > 60 Gew.-% und insbesondere > 70 Gew.-% beträgt, bezogen auf das gesamte Mittel. Eine sinnvolle Obergrenze des Wassergehaltes kann z.B. bei 95 Gew.-% liegen.

Wenn das erfindungsgemäße Wasch- oder Reinigungsmittel ein Weichspüler ist und vorzugsweise ein Kationtensid enthält, insbesondere eine alkylierte, quaternäre Ammoniumverbindung umfasst, wobei mindestens eine Alkylkette durch eine Ester- oder Amidogruppe unterbrochen ist, so liegt eine bevorzugte Ausführungsform der Erfindung vor. Der Einsatz von Kationtensid ermöglicht eine Verbesserung eines angestrebten Wohlgerucheffektes.

Kationtenside sind grenzflächenaktive Verbindungen, in der Regel aus einem gegebenenfalls substituierten Kohlenwasserstoff-Gerüst, mit einer oder mehreren kationischen (positiv geladenen) Gruppen, die in wässriger Lösung vorzugsweise dissoziieren, vorteilhafterweise an Grenzflächen adsorbieren und vorzugsweise oberhalb der kritischen Micellbildungskonzentration zu positiv geladenen Micellen aggregieren. Bekannte Beispiele für Kationtenside sind insbesondere quartäre Ammonium-Verbindungen mit einem oder zwei hydrophoben Alkyl-Resten. Bei Kationtensiden mit zwei hydrophoben Gruppen, die über Ester-Bindungen mit einem quaternierten Di(Tri-)ethanolamin oder einer analogen Verbindung verknüpft sind, spricht man von Esterquats. Diese sind erfindungsgemäß besonders bevorzugt. Andere Beispiele für Kationtenside sind z.B. quartäre Phosphonium-Salze, tertiäre Sulfonium-Salze, Imidazolinium-Salze oder N-Alkylpyridinium-Salze. Kationtenside können auch durch Protonierung von primären Fettaminen oder Fettamin-N-oxiden erhalten werden.

Am meisten bevorzugt sind erfindungsgemäß jedoch quaternäre Ammoniumverbindungen wie Monoalk(en)yltrimethylammonium-Verbindungen, Dialk(en)yldimethylammonium-Verbindungen, Mono-, Di- oder Triester von Fettsäuren mit Alkanolaminen.

Geeignete Beispiele für quaternäre Ammoniumverbindungen sind z.B. in den Formeln (I) und (II) gezeigt: 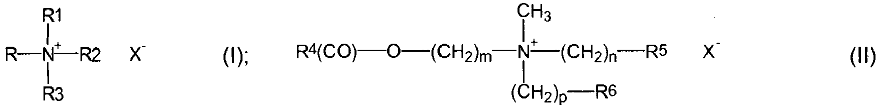 wobei in (I) R für einen acyclischen Alkylrest mit 12 bis 24 Kohlenstoffatomen, R¹ für einen gesättigten C₁-C₄ Alkyl- oder Hydroxyalkylrest steht, R² und R³ entweder gleich R oder R¹ sind oder für einen aromatischen Rest stehen. X⁻ steht entweder für ein Halogenid-, Methosulfat-, Methophosphat- oder Phosphation sowie Mischungen aus diesen. Beispiele für kationische Verbindungen der Formel (I) sind Monotalgtrimethylammoniumchlorid,
Monostearyltrimethylammoniumchlorid, Didecyldimethylammoniumchlorid, Ditalgdimethylammoniumchlorid oder Dihexadecylammoniumchlorid.

Verbindungen der Formel (II), (III) und (IV) sind so genannte Esterquats. Esterquats zeichnen sich durch eine hervorragende biologische Abbaubarkeit aus. In Formel (II) steht R⁴ für einen aliphatischen Alk(en)ylrest mit 12 bis 22 Kohlenstoffatomen mit 0, 1, 2 oder 3 Doppelbindungen und/oder gegebenenfalls mit Substituenten; R⁵ steht für H, OH oder O(CO)R⁷, R⁶ steht unabhängig von R⁵ für H, OH oder O(CO)R⁸, wobei R⁷ und R⁸ unabhängig voneinander jeweils für einen aliphatischen Alk(en)ylrest mit 12 bis 22 Kohlenstoffatomen mit 0, 1, 2 oder 3 Doppelbindungen steht. m, n und p können jeweils unabhängig voneinander den Wert 1, 2 oder 3 haben. X⁻ kann entweder ein Halogenid-, Methosulfat-, Methophosphat- oder Phosphation sowie Mischungen aus diesen Anionen sein. Bevorzugt sind Verbindungen, bei denen R⁵ die Gruppe O(CO)R⁷ darstellt. Besonders bevorzugt sind Verbindungen, bei denen R⁵ die Gruppe O(CO)R⁷ darstellt und R⁴ und R⁷ Alk(en)ylreste mit 16 bis 18 Kohlenstoffatomen sind. Insbesondere bevorzugt sind Verbindungen, bei denen R⁶ zudem für OH steht. Beispiele für Verbindungen der Formel (I) sind Methyl-N-(2-hydroxyethyl)-N,N-di(talgacyloxyethyl)ammonium-methosulfat, Bis-(palmitoyloxyethyl)-hydroxyethyl-methyl-ammonium-methosulfat, 1,2-Bis-[talgacyloxy]-3-trimethylammoniumpropanchlorid oder Methyl-N,N-bis(stearoyloxyethyl)-N-(2-hydroxyethyl)ammonium-methosulfat.

Werden quaternierte Verbindungen der Formel (II) eingesetzt, die ungesättigte Alkylketten aufweisen, sind die Acylgruppen bevorzugt, deren korrespondierenden Fettsäuren eine Jodzahl zwischen 1 und 100, bevorzugt zwischen 5 und 80, mehr bevorzugt zwischen 10 und 60 und insbesondere zwischen 15 und 45 aufweisen und die ein cis/trans-Isomerenverhältnis (in Gew.-%) von größer als 30 : 70, vorzugsweise größer als 50 : 50 und insbesondere gleich oder größer als 60 : 40 haben. Handelsübliche Beispiele sind die von Stepan unter dem Warenzeichen Stepantex^{®} vertriebenen Methylhydroxyalkyldialkoyloxyalkylammoniummethosulfate oder die unter Dehyquart® bekannten Produkte von Cognis, die unter Rewoquat^{®} bekannten Produkte von Degussa bzw. die unter Tetranyl® bekannten Produkte von Kao. Weitere bevorzugte Verbindungen sind die Diesterquats der Formel (III), die unter dem Namen Rewoquat® W 222 LM bzw. CR 3099 erhältlich sind. 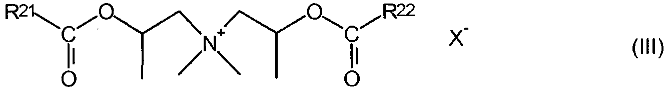 R²¹ und R²² stehen dabei unabhängig voneinander jeweils für einen aliphatischen Rest mit 12 bis 22 Kohlenstoffatomen mit 0, 1, 2 oder 3 Doppelbindungen.

Anstelle der Estergruppe O(CO)R, wobei R für einen langkettigen Alk(en)ylrest steht, können weichmachende Verbindungen eingesetzt werden, die folgende Gruppen aufweisen: RO(CO), N(CO)R oder RN(CO) weisen, wobei von diesen Gruppen N(CO)R-Gruppen bevorzugt sind.

Geeignete Kationtenside sind z.B. auch quaternäre Imidazoliniumverbindungen der Formel (IV), 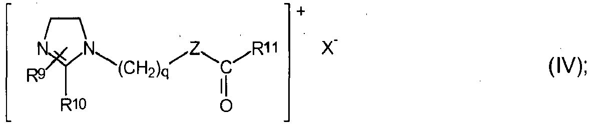 wobei R⁹ für H oder einen gesättigten Alkylrest mit 1 bis 4 Kohlenstoffatomen, R¹⁰ und R¹¹ unabhängig voneinander jeweils für einen aliphatischen, gesättigten oder ungesättigten Alkylrest mit 12 bis 18 Kohlenstoffatomen, R¹⁰ alternativ auch für O(CO)R²⁰ stehen kann, wobei R²⁰ einen aliphatischen, gesättigten oder ungesättigten Alkylrest mit 12 bis 18 Kohlenstoffatomen bedeutet, und Z eine NH-Gruppe oder Sauerstoff bedeutet und X⁻ ein Anion ist. q kann ganzzahlige Werte zwischen 1 und 4 annehmen.

Weitere besonders bevorzugte Kationtenside sind durch Formel (V) beschrieben, 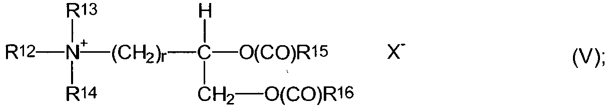 wobei R¹², R¹³ und R¹⁴ unabhängig voneinander für eine C₁₋₄-Alkyl-, Alkenyl- oder Hydroxyalkylgruppe steht, R¹⁵ und R¹⁶ jeweils unabhängig ausgewählt eine C₈₋₂₈-Alkylgruppe darstellt, X⁻ ein Anion ist und r eine Zahl zwischen 0 und 5 ist. Ein bevorzugtes Beispiel einer kationischen Abscheidungshilfe gemäß Formel (V) ist 2,3-Bis[talgacyloxy]-3-trimethylammoniumpropanchlorid.

Weitere erfindungsgemäß verwendbare Kationtenside stellen die quaternisierten Proteinhydrolysate oder protonierte Amine dar.

Besonders bevorzugte Kationtenside sind alkylierte quaternäre Ammoniumverbindungen, von denen mindestens eine Alkylkette durch eine Estergruppe und/oder Amidogruppe unterbrochen ist. Ganz besonders bevorzugt sind N-Methyl-N-(2-hydroxyethyl)-N,N-(ditalgacyloxyethyl)ammoniummethosulfat oder Bis-(palmitoyloxyethyl)-hydroxyethyl-methyl-ammonium-methosulfat.

Nach einer bevorzugten Ausführungsform der Erfindung enthält ein erfindungsgemäßes Wasch- oder Reinigungsmittel, wie insbesondere Weichspüler, ein Kationtensid, vorzugsweise eine quartäre Ammonium-Verbindung, insbesondere Esterquat, vorzugsweise in Mengen von > 0,1 Gew.-%, vorteilhafterweise 1 bis 40 Gew.-%, insbesondere 3 bis 30 Gew.-%, Gew.-% bezogen auf das gesamte Wasch- oder Reinigungsmittel. Sinnvolle Obergrenzen für die Menge des Kationtensids können auch bei 25 Gew.-%, 20 Gew.-%, 15 Gew.-% oder 10 Gew.-% liegen. Sinnvolle Untergrenzen für die Menge des Kationtensids können auch bei 4 Gew.-%, 5 Gew.-% oder 10 Gew.-% liegen, Gew.-% jeweils bezogen auf das gesamte Wasch- oder Reinigungsmittel. Nach einer anderen Ausführungsform kann ein erfindungsgemäßes Wasch- oder Reinigungsmittel ganz frei von Kationtensid sein.

Ebenfalls als Kationtenside optional einsetzbar sind polyquaternierte Polymere (z.B. Luviquat® Care von BASF) und auch kationische Biopolymere auf Chitinbasis und deren Derivate, z.B. das unter der Handelsbezeichnung Chitosan® (Hersteller: Cognis) erhältliche Polymer. Weitere geeignete Kationtenside umfassen protonierte oder quaternierte Polyamine.

Eine erfindungsgemäßes Wasch- oder Reinigungsmittel kann als Textilpflegestoff vorteilhafterweise Textil-weichmachende Tone umfassen. Da Textil-weichmachende Tone auch einen Wasser-enthärtenden Effekt aufweisen, werden zusätzlich Kalkablagerungen auf der Wäsche verhindert.

Als Textil-weichmachender Ton ist z.B. Smectit-Ton geeignet. Bevorzugte Smectit-Tone sind Beidellit-Tone, Hectorit-Tone, Laponit-Tone, Montmorillonit-Tone, Nontronit-Tone, Saponit-Tone, Sauconit-Tone und Mischungen daraus. Montmorillonit-Tone sind die bevorzugten weichmachenden Tone. Bentonite enthalten hauptsächlich Montmorillonite und können als bevorzugte Quelle für den Textil-weichmachenden Ton dienen. Geeignete Bentonite werden beispielsweise unter den Bezeichnungen Laundrosil® von der Firma Süd-Chemie oder unter der Bezeichnung Detercal von der Firma Laviosa vertrieben. Die Menge an Textil-weichmachendem Ton in einem erfindungsgemäßen Wasch- oder Reinigungsmittel kann z.B. zwischen 0,1 und 10 Gew.-% und bevorzugt 1 bis 5 Gew.-% betragen, bezogen auf das gesamte Mittel. Nach einer anderen Ausführungsform ist in dem erfindungsgemäßen Wasch- oder Reinigungsmittel gar kein Textil-weich-machender Ton enthalten oder nur sehr geringe Menge, z.B. < 0,1 Gew.-%, bezogen auf das gesamte Mittel.

Ein Textilpflegestoff, welcher insbesondere in Kombination mit dem Gewebeweichmacherton aber auch unabhängig von diesem im erfindungsgemäßen Wasch- oder Reinigungsmittel verwendet werden kann, ist ein organischer Fettsäureweichmacher. Der organische Weichmacher kann aus anionischen, kationischen oder nicht-ionischen Fettketten bestehen (C10-C22, bevorzugt C12-C18). Anionische Weichmacher umfassen Fettsäureseifen. Bevorzugte organische Weichmacher sind nicht-ionische Verbindungen, wie Fettsäureester, ethoxylierte Fettsäureester, Fettalkohole und Polyolpolymere. Der organische Weichmacher ist am stärksten bevorzugt ein höherer Fettsäureester einer Pentaerythritolverbindung, wobei der Ausdruck in dieser Beschreibung verwendet wird, um höherer Fettsäureester von Pentaerythritol, höhere Fettsäureester von Pentaerythritololigomeren, höhere Fettsäureester von Niederalkylenoxidderivaten von Pentaerythritol und höhere Fettsäureester von Niederalkylenoxidderivaten von Pentaerythritololigomeren zu beschreiben.

Eine erfindungsgemäßes Wasch- oder Reinigungsmittel kann als möglichen Textilpflegestoff z.B. ein Textil-weichmachendes Polymer, insbesondere ein Polysiloxan und/oder ein kationisches Polymer, enthalten. Auf diese Weise kann eine Verbesserung des angestrebten Wohlgeruchs erzielt werden.

Ein bevorzugt einsetzbares Polysiloxan weist zumindest folgende Struktureinheit auf 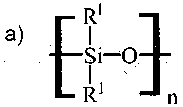 mit
R¹= unabhängig von einander C₁-C₃₀-Alkyl, vorzugsweise C₁-C₄-Alkyl, insbesondere Methyl oder Ethyl,
n = 1 bis 5000, vorzugsweise 10 bis 2500, insbesondere 100 bis 1500.

Es kann bevorzugt sein, dass das Polysiloxan zusätzlich auch folgende Struktureinheit aufweist: 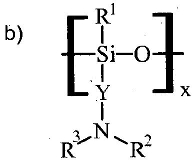 mit
R¹= C₁-C₃₀-Alkyl, vorzugsweise C₁-C₄-Alkyl, insbesondere Methyl oder Ethyl,
Y = ggf. substituiertes, lineares oder verzweigtes C₁-C₂₀-Alkylen, vorzugsweise -(CH₂)ₘ- mit m= 1 bis 16, vorzugsweise 1 bis 8, insbesondere 2 bis 4, im speziellen 3,
R², R³ = unabhängig voneinander H oder gegebenenfalls substituiertes, lineares oder verzweigtes C₁-C₃₀-Alkyl, vorzugsweise mit Aminogruppen substituiertes C₁-C₃₀-Alkyl, besonders
bevorzugt -(CH₂)_{b}-NH₂ mit b = 1 bis 10, äußerst bevorzugt b = 2,
x = 1 bis 5000, vorzugsweise 10 bis 2500, insbesondere 100 bis 1500.

Weist das Polysiloxan nur die Struktureinheit a) mit R¹ = Methyl auf, handelt es sich um ein Polydimethylsiloxan. Polydimethylpolysiloxane sind als effiziente Textil-pflegende Verbindungen bekannt.

Geeignete Polydimethysiloxane umfassen DC-200 (ex Dow Corning), Baysilone® M 50, Baysilone® M 100, Baysilone® M 350, Baysilone® M 500, Baysilone® M 1000, Baysilone® M 1500, Baysilone® M 2000 oder Baysilone® M 5000 (alle ex GE Bayer Silicones).

Es kann bevorzugt sein, dass das Polysiloxan die Struktureinheiten a) und b) enthält. Ein besonders bevorzugtes Polysiloxan weist die folgende Struktur auf:

(CH₃)₃Si-[O-Si(CH₃)₂]ₙ-[O-Si(CH₃){(CH₂)₃-NH-(CH₂)₂-NH₂}]ₓ-OSi(CH₃)₃

wobei die Summe n + x eine Zahl zwischen 2 und 10.000 ist.

Geeignete Polysiloxane mit den Struktureinheiten a) und b) sind z.B. kommerziell unter den Markennamen DC2-8663, DC2-8035, DC2-8203, DC05-7022 oder DC2-8566 (alle ex Dow Corning) erhältlich. Erfindungsgemäß ebenfalls geeignet sind beispielsweise die im Handel erhältlichen Produkte Dow Corning^{®} 7224, Dow Corning^{®} 929 Cationic Emulsion oder Formasil 410 (GE Silicones).

Geeignete kationische Polymere umfassen insbesondere solche, die in "CTFA International Cosmetic Ingredient Dictionary", Fourth Edition, J. M. Nikitakis, et al, Editors, veröffentlicht durch die Cosmetic, Toiletry, and Fragrance Association, 1991 beschrieben sind und unter der Sammelbezeichnung "Polyquaternium" zusammengefasst sind.

Nach einer bevorzugten Ausführungsform enthält ein erfindungsgemäßer Weichspüler
a) mikroverkapselte Riechstoffe, wie zuvor beschrieben
b) vorteilhafterweise Kationtensid, vorzugsweise solches, wie zuvor beschrieben, insbesondere in Mengen wie zuvor beschrieben,
c) vorteilhafterweise nicht verkapselte Riechstoffe, vorzugsweise in Mengen > 0,01 Gew.-%, vorteilhafterweise 0,05 bis 10 Gew.-%, insbesondere 0,1 bis 5 Gew.-%,
d) Wasser, vorzugsweise in Mengen > 50 Gew.-%, vorteilhafterweise > 60 Gew.-%, insbesondere > 70 Gew.-%
e) optional Lösungsmittel, wie vorzugsweise einwertige Alkohole, insbesondere 2-Propanol, vorteilhafterweise in Mengen von 0,05 bis 5 Gew.-%, vorzugsweise 0,1 bis 4 Gew.-%, insbesondere 0,3 - 3 Gew.-%,
f) optional Emulgatoren, wie vorzugsweise Niotenside, vorteilhafterweise in Mengen von 0 bis 8 Gew.-%, insbesondere 0,1 bis 5 Gew.-%
g) optional pH-Stellmittel, vorzugsweise 0,01 bis 5 Gew.-%, insbesondere 0,02 bis 1 Gew.-%
h) optional Elektrolyte, vorzugsweise aus der Gruppe der anorganischen Salze, vorteilhafterweise MgCl₂ oder NaCl, 0,01 bis 5 Gew.-%, insbesondere 0,05 bis 2 Gew.-%,
i) optional hautpflegende Aktivstoffe, vorzugsweise in einer Menge von 0 bis 15 Gew.-%, vorteilhafterweise 0,1 - 10 Gew.-%, insbesondere 0,5 bis 5 Gew.-%,
j) optional Verdicker, z.B. auf Polyacrylat-Basis, vorzugsweise in Mengen von 0,01 bis 3 Gew.-%, insbesondere 0,1 bis 1 Gew.-%,
Gew.-% jeweils bezogen auf das gesamte Wasch- oder Reinigungsmittel.

Vorzugsweise in einem erfindungsgemäßen Weichspüler nach vorstehender Ausführungsform einsetzbare Verdicker, Elektrolyte, pH-Stellmittel, Lösungsmittel und/oder Niotenside werden im weiteren Verlauf z.T. noch beschrieben.

Erfindungsgemäße Wasch- oder Reinigungsmittel, insbesondere Weichspüler, können vorzugsweise auch nichtionische weichmachende Komponenten enthalten, wie vor allem Polyoxyalkylenglycerolalkanoate, Polybutylene, langkettige Fettsäuren, ethoxylierte Fettsäureethanolamide, Alkylpolyglucoside, insbesondere Sorbitanmono,-di- und -triester, und Fettsäureester von Polycarbonsäuren enthalten.

Als optionale nichtionische Tenside können in den erfindungsgemäßen Wasch- oder Reinigungsmitteln vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt werden, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohöl, und durchschnittlich 2 bis 8 EO pro Mol Alkohol bevorzugt. Zu den bevorzugten ethoxylierten Alkoholen gehören z.B. C₁₂₋₁₄-Alkohole mit 3 EO, 4 EO oder 7 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind erfindungsgemäß einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere optionale nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4. Alkylglykoside sind bekannte, milde Tenside und werden deshalb bevorzugt in dem Tensidgemisch eingesetzt.

Die nichtionischen Tenside können in den erfindungsgemäßen Wasch- oder Reinigungsmitteln, wie z.B. Wasch- oder Reinigungsmitteln, vorzugsweise in Mengen von 0-8 Gew.-% enthalten sein, z.B. in Mengen > 0,01 Gew.-% oder > 0,1 Gew.-%. Jedoch ist es auch möglich, dass diese z.B. 2 bis 30 Gew.-%, vorzugsweise 7 bis 20 Gew.-% und insbesondere 9 bis 15 Gew.-% Niotensid enthalten können, Gew.-% jeweils bezogen auf das gesamte Wasch- oder Reinigungsmittel.

Ein erfindungsgemäßes Wasch- oder Reinigungsmitteln kann optional auch anionisches Tensid umfassen, z.B. in Mengen > 0,1 Gew.-% oder z.B. > 5 Gew.-% oder z.B. > 10 Gew.-%. Es ist auch möglich, dass ein erfindungsgemäßes Wasch- oder Reinigungsmittel, wie insbesondere ein Weichspüler, frei von Aniontensid ist, also weniger als 5 Gew.-%, 2 Gew.-% oder 1 Gew.-% an anionischem Tensid, insbesondere aber 0 Gew.-% an anionischem Tensid umfasst, Gew.-% bezogen auf das gesamte Wasch- oder Reinigungsmittel.

Als optionales anionisches Tensid kann z.B. solches vom Typ der Sulfonate und Sulfate eingesetzt werden. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), zum Beispiel die α-sulfonierten Methylester der hydrierten Kokos-, Palmkern- oder Talgfettsäuren geeignet. Weitere geeignete Aniontenside sind z.B. sulfierte Fettsäureglycerinester.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Zusätzlich können die erfindungsgemäßen Wasch- oder Reinigungsmittel optional noch weitere Inhaltsstoffe enthalten, insbesondere solche optionale Inhaltsstoffe, welche die anwendungstechnischen und/oder ästhetischen Eigenschaften des Wasch- oder Reinigungsmittels weiter verbessern. Im Rahmen der vorliegenden Erfindung können bevorzugte Wasch- oder Reinigungsmittel zusätzlich einen oder mehrere Stoffe insbesondere aus der Gruppe der Gerüststoffe (Builder), Bleichmittel, Bleichaktivatoren, Enzyme, Elektrolyte, Feuchthaltemittel, nichtwässrigen Lösungsmittel, pH-Stellmittel, Parfümträger, Fluoreszenzmittel, Farbstoffe, Hydrotope, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikröbiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, neutrale Füllsalze sowie ggf. UV-Absorber enthalten.

Als Gerüststoffe, die in den Wasch- oder Reinigungsmitteln optional enthalten sein können, z.B. in Mengen > 0,1 Gew.-%, sind z.B. Silikate, Aluminiumsilikate (insbesondere Zeolithe), Carbonate, Salze organischer Di- und Polycarbonsäuren sowie Mischungen dieser Stoffe zu nennen. Selbstverständlich ist auch ein optionaler Einsatz der allgemein bekannten Phosphate als Buildersubstanzen möglich, z.B. in Mengen > 0,1 Gew.-%, sofern ein derartiger Einsatz nicht aus ökologischen Gründen vermieden werden sollte. Organische Builder, welche in dem Wasch- oder Reinigungsmittel optional vorhanden sein können, z.B. in Mengen > 0,1 Gew.-%, umfassen z.B. Polycarboxylatpolymere wie Polyacrylate und Acrylsäure/Maleinsäure-Copolymere, Polyaspartate und monomere Polycarboxylate wie Citrate, Gluconate, Succinate oder Malonate, die bevorzugt als Natriumsalze eingesetzt werden. Wenn Builder eingesetzt werden sollen, dann sind organische Builder zu bevorzugen.

Möglich ist auch der optionale Einsatz von Bleichmittel, z.B. in Mengen > 0,1 Gew.-%. Unter den als Bleichmittel dienenden, in Wasser H₂O₂ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure. Vorzugsweise kann das erfindungsgemäße Wasch- oder Reinigungsmittel auch frei von Bleichmittel sein, enthält dann also vorzugsweise weniger als 3 Gew.-%, 2 Gew.-% oder 1 Gew.-% an zusätzlichem Bleichmittel, insbesondere ist überhaupt kein, also 0 Gew.-%, zusätzliches Bleichmittel enthalten, Gew.-% bezogen auf das gesamte Wasch- oder Reinigungsmittel.

Optional können Bleichaktivatoren in die Wasch- oder Reinigungsmittel eingearbeitet werden. Als Bleichaktivatoren können z.B. Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind z.B. mehrfach acylierte Alkylendiamine wie insbesondere Tetraacetylethylendiamin (TAED). Vorzugsweise enthalten die erfindungsgemäßen Wasch- oder Reinigungsmittel jedoch gar keine Bleichaktivatoren.

Ein erfindungsgemäßes Wasch- oder Reinigungsmittel kann, insbesondere wenn es flüssig ist, optional ein Verdickungsmittel enthalten, z.B. in Mengen > 0,01 Gew.-%. Dies entspricht einer bevorzugten Ausführungsform der Erfindung. Das Verdickungsmittel kann beispielsweise einen Polyacrylat-Verdicker, Xanthan Gum, Gellan Gum, Guarkernmehl, Alginat, Carrageenan, Carboxymethylcellulose, Bentonite, Wellan Gum, Johannisbrotkernmehl, Agar-Agar, Tragant, Gummi arabicum, Pektine, Polyosen, Stärke, Dextrine, Gelatine und Casein umfassen. Aber auch abgewandelte Naturstoffe wie modifizierten Stärken und Cellulosen, beispielhaft seien hier Carboxymethylcellulose und andere Celluloseether, Hydroxyethyl- und -propylcellulose sowie Kernmehlether genannt, können als Verdickungsmittel eingesetzt werden. Zu den Polyacryl- und Polymethacryl-Verdickern zählen beispielsweise die hochmolekularen mit einem Polyalkenylpolyether, insbesondere einem Allylether von Saccharose, Pentaerythrit oder Propylen, vernetzten Homopolymere der Acrylsäure (INCI- Bezeichnung gemäß "International Dictionary of Cosmetic Ingredients" der "The Cosmetic, Toiletry and Fragrance Association (CTFA)": Carbomer), die auch als Carboxyvinylpolymere bezeichnet werden. Ein weiteres bevorzugt einsetzbares polymeres Verdickungsmittel ist Xanthan Gum. Als Verdickungsmittel kommt insbesondere auch ein Fettalkohol in Frage. Fettalkohole können verzweigt oder nichtverzweigt sowie nativen Ursprungs oder petrochemischen Ursprungs sein. Bevorzugte Fettalkohole haben eine C-Kettenlänge von 10 bis 20 C-Atomen, bevorzugt 12 bis 18. Bevorzugt werden Mischungen unterschiedlicher C-Kettenlängen, wie Talgfettalkohol oder Kokosfettalkohol, eingesetzt. Bevorzugte erfindungsgemäße Wasch- oder Reinigungsmittel können bezogen auf das gesamte Wasch- oder Reinigungsmittel vorteilhafterweise 0,01 bis 3 Gew.-% und vorzugsweise 0,1 bis 1 Gew.-% Verdickungsmittel enthalten. Die Menge an optional einsetzbarem Verdickungsmittel ist dabei abhängig von der Art des Verdickungsmittels und dem gewünschten Grad der Verdickung.

Das Wasch- oder Reinigungsmittel kann Enzyme in verkapselter Form und/oder direkt in dem Wasch- oder Reinigungsmittel enthalten. Als Enzyme kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen, Hemicellulase, Cutinasen, β-Glucanasen, Oxidasen, Peroxidasen, Perhydrolasen und/oder Laccasen und Gemische der genannten Enzyme in Frage. Die Enzyme können an Trägerstoffe adsorbiert sein, um sie gegen vorzeitige Zersetzung zu schützen. Der Anteil der Enzyme, der Enzymflüssigformulierung(en) oder der Enzymgranulate direkt in dem Wasch- oder Reinigungsmittel kann beispielsweise etwa 0,01 bis 5 Gew.-%, vorzugsweise 0,12 bis etwa 2,5 Gew.-% betragen. Ebenso ist es möglich, dass das Wasch- oder Reinigungsmittel gar keine Enzyme enthält. Dies entspricht einer bevorzugten Ausführungsform.

Als Elektrolyte aus der Gruppe der anorganischen Salze kann eine breite Anzahl der verschiedensten Salze eingesetzt werden. Bevorzugte Kationen sind die Alkali- und Erdalkalimetalle, bevorzugte Anionen sind die Halogenide und Sulfate. Aus herstellungstechnischer Sicht ist der Einsatz von NaCl oder MgCl₂ in den Wasch- oder Reinigungsmitteln bevorzugt. Der optionale Anteil an Elektrolyten in dem Wasch- oder Reinigungsmittel kann z.B. 0,01 bis 5 Gew.-% betragen.

Nichtwässrige Lösungsmittel, die in den erfindungsgemäßen Wasch- oder Reinigungsmitteln optional eingesetzt werden können, stammen beispielsweise aus der Gruppe der ein- oder mehrwertigen Alkohole, Alkanolamine oder Glykolether. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethyl-, -ethyl- oder -propylether, Dipropylenglykolmonomethyl- oder -ethylether, Di-isopropylenglykolmonomethyl- oder -ethylether, Methoxy-, Ethoxy- oder Butoxytriglykol, 1-Butoxyethoxy-2-propanol, 3-Methyl-3-methoxybutanol, Propylen-glykol-t-butylether sowie Mischungen dieser Lösungsmittel. Nichtwässrige Lösungsmittel können in den erfindungsgemäßen Wasch- oder Reinigungsmitteln vorzugsweise in Mengen zwischen 0,5 und 15 Gew.-%, bevorzugt aber unter 12 Gew.-% und insbesondere unterhalb von 9 Gew.-% eingesetzt werden.

Die Viskosität erfindungsgemäßer flüssiger Wasch- oder Reinigungsmittel kann mit üblichen Standardmethoden (beispielsweise Brookfield-Viskosimeter LVT-II bei 20 U/min und 20°C, Spindel 3) gemessen werden und beträgt vorzugsweise 20 bis 4000 mPas, wobei Werte zwischen 40 und 2000 mPas besonders bevorzugt sind. Insbesondere bevorzugt liegt die Viskosität von Weichspülern im Bereich von 40 bis 1000 mPas.

Um den pH-Wert der erfindungsgemäßen Wasch- oder Reinigungsmittel in den gewünschten Bereich zu bringen, kann der Einsatz von pH-Stellmitteln angezeigt sein. Einsetzbar sind hier sämtliche bekannten Säuren bzw. Laugen, sofern sich ihr Einsatz nicht aus anwendungstechnischen oder ökologischen Gründen bzw. aus Gründen des Verbraucherschutzes verbietet. Üblicherweise überschreitet die Menge dieser Stellmittel 7 Gew.-% oder vorzugsweise 5 Gew.-% der Gesamtformulierung nicht. Eine Untergrenze kann z.B. bei 0,1 Gew.-% liegen. Der pH-Wert eines erfindungsgemäßen Weichspülers liegt vorzugsweise zwischen 1 und 6 und bevorzugt zwischen 1,5 und 3,5.

Die Herstellung der erfindungsgemäßen Wasch- oder Reinigungsmittel kann nach allen dem Fachmann geläufigen Techniken zur Herstellung von Wasch- oder Reinigungsmitteln erfolgen.

Die Herstellung eines erfindungsgemäßen Weichspülers kann also nach dem Fachmann geläufigen Techniken zur Herstellung von Weichspülern erhalten werden. Dies kann beispielsweise durch Aufmischen der Rohstoffe, gegebenenfalls unter Einsatz von hochscherenden Mischapparaturen, geschehen. Es empfiehlt sich ein Aufschmelzen der ggf. eingesetzten Kationtenside und ein nachfolgendes Dispergieren der Schmelze in einem Lösungsmittel, vorzugsweise Wasser. Die weiteren Inhaltsstoffe inklusive z.B. der Mikrokapseldispersionen können durch einfaches Zumischen in die Wasch- oder Reinigungsmittel integriert werden. Die Mikrokapseldispersionen werden vorzugsweise unter schonenden Bedingungen, insbesondere unter Bedingungen mit geringer Scherung bzw. geringem Energieeintrag zugegeben, beispielsweise unter Zuhilfenahme eines statischen Mischers.

### Beispiel

Durch säureinduzierte Kondensation von Melamin-Formaldehyd-Vorkondensaten wurden zwei Ansätze einer wässrigen Dispersion riechstoffhaltiger Mikrokapseln hergestellt, welche jeweils einen Festkörperanteil (d.h. riechstoffhaltige Mikrokapseln) von ca. 45 Gew.-% und einen Wasseranteil von ca. 54 Gew.-% aufwiesen. Riechstoffe, vorliegend in den Mikrokapseln, waren jeweils in Mengen von 35 Gew.-% enthalten, Gew.-% jeweils bezogen auf die gesamte Dispersion.

Der Ansatz A wurde unverändert belassen. Zu dem zweiten Ansatz B wurden direkt anschließend noch 4,5 Gewichtsteile eines ethoxylierten Oxoalkohols gegeben und untergerührt.

Der Ansatz A begann sich nach einigen Minuten aufzutrennen und bildete bereits nach 2 Stunden eine schnittfeste Oberphase aus.

Der erfindungsgemäß stabilisierte Ansatz B war hingegen über den gesamten Beobachtungszeitraum von 4 Wochen stabil und konnte auch nach 4 Wochen Lagerung ohne weiteres weiterverarbeitet werden und war sehr gut sprüh- und pumpfähig.

## Patentansprüche

1. Verfahren zur Stabilisierung wässriger Dispersionen von Mikrokapseln, welche durch Kondensation von Melamin-Formaldehyd-Vorkondensaten und/oder deren C₁-C₄-Alkylethern in Gegenwart eines Schutzkolloids erhältlich sind, durch Zugabe von Tensid, wobei
a) eine wässrige Dispersionen von Mikrokapseln durch Kondensation eines vorzugsweise teilmethylierten Melamin-Formaldehyd-Harzes, vorzugsweise mit einem Molverhältnis von Melamin : Formaldehyd : Methanol von 1:3,0:2,0 bis 1:6,0:4,0, in Wasser, in welchem das im Wesentlichen wasserunlösliche, den Kapselkern bildende Material, vorzugsweise umfassend Riechstoffe, dispergiert ist, in Gegenwart eines Schutzkolloids bei pH Werten von vorzugsweise 3 bis 6,5 durch Präformierung der Mikrokapseln bei einer Temperatur von vorzugsweise 20 bis 50 °C und anschließender Härtung der Kapselwand bei vorzugsweise > 50 bis 100 °C hergestellt wird,
b) der pH-Wert der Dispersion vor der Zugabe des Tensides auf einen Wert von 7 bis 10, vorzugsweise 7,5 bis 9 eingestellt wird und
c) anschließend ein Tensid zur Stabilisierung der Dispersion zugegeben wird.

2. Verfahren nach Anspruch 1, **dadurch gekennzeichnet, dass** die zu stabilisierende Mikrokapseldispersion einen Feststoffgehalt von wenigstens 15 Gew.%, vorzugsweise wenigstens 20 Gew.-% und insbesondere wenigstens 30 Gew.-% aufweist, Gew.-% bezogen auf die zu stabilisierende Mikrokapseldispersion.

3. Verfahren nach einem der Ansprüche 1 bis 2, **dadurch gekennzeichnet, dass** die zu stabilisierende Mikrokapseldispersion einen Wassergehalt von wenigstens 30 Gew.-%, vorzugsweise wenigstens 40 Gew.-% und insbesondere wenigstens 50 Gew.-% aufweist, Gew.-% bezogen auf die zu stabilisierende Mikrokapseldispersion.

4. Verfahren nach einem der Ansprüche 1 bis 3, **dadurch gekennzeichnet, dass** die Mikrokapseln riechstoffhaltig sind, wobei der Anteil der in den Mikrokapseln enthaltenen Riechstoffen > 15 Gew.-%, vorzugsweise > 20 Gew.-%. insbesondere > 30 Gew.-% beträgt, Gew.-% bezogen auf die zu stabilisierende Mikrokapseldispersion.

5. Stabilisierte Dispersion von (vorzugsweise riechstoffhaltigen) Mikrokapseln, erhältlich nach einem Verfahren nach einem der Ansprüche 1 bis 4.

6. Verwendung der stabilisierten Dispersionen von (vorzugsweise riechstoffhaltigen) Mikrokapseln nach Anspruch 5 zur Herstellung von Wasch- oder Reinigungsmitteln.

7. Verwendung von Tensid zur Stabilisierung von Mikrokapseldispersionen (vorzugsweise Dispersionen riechstoffhaltiger Mikrokapseln) auf Basis von Melamin-Formaldehyd-Harzen, wobei man nach einem Verfahren zur Herstellung von Mikrokapseln, bei welchem durch Kondensation eines vorzugsweise teilmethylierten Melamin-Formaldehyd-Harzes, vorzugsweise mit einem Molverhältnis von Melamin : Formaldehyd : Methanol von 1:3,0:2,0 bis 1:6,0:4,0, in Wasser, in dem das im Wesentlichen wasserunlösliche, den Kapselkern bildende Material, vorzugsweise umfassend Riechstoffe, dispergiert ist, in Gegenwart eines Schutzkolloids bei pH Werten von vorzugsweise 3 bis 6,5 durch Präformierung der Mikrokapseln bei einer Temperatur von vorzugsweise 20 bis 50 °C und anschließender Härtung der Kapselwand bei vorzugsweise > 50 bis 100 °C eine Mikrokapseldispersion erzeugt wird und der pH-Wert der Dispersion vor der Zugabe des Tensides auf einen Wert von 7 bis 10, vorzugsweise 7,5 bis 9 eingestellt wird, ein Tensid zur Stabilisierung der erhaltenen Mikrokapseldispersionen einsetzt.

8. Verwendung nach Anspruch 8, wobei als Tensid kationisches, anionisches und/oder nichtionisches Tensid eingesetzt wird, vorzugsweise nichtionisches Tensid, insbesondere ethoxylierter Oxoalkohol.

9. Verfahren zur Herstellung eines (vorzugsweise riechstoffhaltige) Mikrokapseln enthaltenden Wasch- oder Reinigungsmittels, **dadurch gekennzeichnet, dass** man ein Wasch- oder Reinigungsmittel mit einer Mikrokapseldispersion gemäß Anspruch 5 vermengt.

10. Verfahren nach Anspruch 9, wobei man einen flüssigen Weichspüler mit einer Mikrokapseldispersion gemäß Anspruch5 vermengt, vorzugsweise durch Einrühren der Mikrokapseldispersion in die Weichspülermatrix oder durch kontinuierliche Zugabe in einen flüssigen Weichspüler und Vermischen über statische Mischelemente.

11. Verfahren nach Anspruch9 zur Herstellung eines festen Wasch- oder Reinigungsmittels, wobei die Mikrokapseldispersion vor dem Vermischen mit einem Wasch- oder Reinigungsmittel granuliert wird.

## Claims

1. A method for stabilizing aqueous dispersions of microcapsules, which can be obtained by condensation of melamine-formaldehyde precondensates and/or the C₁-C₄ alkyl ethers thereof in the presence of a protective colloid, by adding a surfactant, wherein
a) an aqueous dispersion of microcapsules is produced by condensation in water of a preferably partially methylated melamine-formaldehyde resin, preferably having a molar ratio of melamine : formaldehyde : methanol of between 1:3.0:2.0 and 1:6.0:4.0, in which the substantially water-insoluble, capsule-core forming material, preferably comprising odorants, is dispersed, in the presence of a protective colloid at pH values of preferably 3 to 6.5 by preforming the microcapsules at a temperature of preferably 20 to 50°C and subsequently hardening the capsule wall at preferably > 50 to 100°C,
b) the pH value of the dispersion is adjusted to a value of 7 to 10, preferably 7.5 to 9, before adding the surfactant, and
c) a surfactant for stabilizing the dispersion is subsequently added.

2. The method according to claim 1, **characterized in that** the microcapsule dispersion to be stabilized has a solids content of at least 15 wt.%, preferably at least 20 wt.% and in particular at least 30 wt.%, wt.% based on the microcapsule dispersion to be stabilized.

3. The method according to one of claims 1 to 2, **characterized in that** the microcapsule dispersion to be stabilized has a water content of at least 30 wt.%, preferably at least 40 wt.% and in particular at least 50 wt.%, wt.% based on the microcapsule dispersion to be stabilized.

4. The method according to one of claims 1 to 3, **characterized in that** the microcapsules contain odorants, wherein the proportion of odorants contained in the microcapsules is > 15 wt.%, preferably > 20 wt.%, in particular > 30 wt.%, wt.% based on the microcapsule dispersion to be stabilized.

5. A stabilized dispersion of (preferably odorant-containing) microcapsules, which can be obtained by a method according to one of claims 1 to 4.

6. The use of the stabilized dispersions of (preferably odorant-containing) microcapsules according to claim 5 for producing washing agents or cleaning agents.

7. The use of a surfactant for stabilizing microcapsule dispersions (preferably dispersions of odorant-containing microcapsules) based on melamine-formaldehyde resins, wherein a surfactant is used for stabilizing the microcapsule dispersions obtained following a method for producing microcapsules in which a microcapsule dispersion is produced by condensation in water of a preferably partially methylated melamine-formaldehyde resin, preferably having a molar ratio of melamine : formaldehyde : methanol of between 1:3.0:2.0 and 1:6.0:4.0, in which the substantially water-insoluble, capsule-core forming material, preferably comprising odorants, is dispersed, in the presence of a protective colloid at pH values of preferably 3 to 6.5 by preforming the microcapsules at a temperature of preferably 20 to 50°C and subsequently hardening the capsule wall at preferably > 50 to 100°C, and the pH value of the dispersion is adjusted to a value of 7 to 10, preferably 7.5 to 9, before adding the surfactant.

8. The use according to claim 8, wherein a cationic, anionic and/or non-ionic surfactant, preferably a non-ionic surfactant, in particular ethoxylated oxo alcohol, is used as the surfactant.

9. A method for producing a washing agent or cleaning agent containing (preferably odorant-containing) microcapsules, **characterized in that** a washing agent or cleaning agent is combined with a microcapsule dispersion according to claim 5.

10. The method according to claim 9, wherein a liquid softener is combined with a microcapsule dispersion according to claim 5, preferably by stirring the microcapsule dispersion into the softener matrix or by continuous addition to a liquid softener and mixing by means of static mixing elements.

11. The method according to claim 9 for producing a solid washing agent or cleaning agent, wherein the microcapsule dispersion is granulated before being mixed with a washing agent or cleaning agent.

## Revendications

1. Procédé de stabilisation de dispersions aqueuses de microcapsules, qui peuvent être obtenues en présence d'un colloïde protecteur par condensation de pré-condensats de mélamine-formaldéhyde et/ou de leurs éthers d'alkyle en C₁ à C₄, par ajout d'un tensioactif, procédé dans lequel
a) une dispersion aqueuse de microcapsules est produite par condensation d'une résine de mélamine-formaldéhyde, de préférence partiellement méthylée, de préférence dans un rapport molaire mélamine:formaldéhyde:méthanol allant de 1:3,0:2,0 à 1:6,0:4,0, dans de l'eau dans laquelle la matière sensiblement non-hydrosoluble, formant le noyau des capsules, comportant de préférence des substances odorantes, est dispersée, en présence d'un colloïde protecteur à des valeurs de pH allant de préférence de 3 à 6,5, par préformage des microcapsules à une température de préférence de 20 à 50°C puis par durcissement de la paroi des capsules de préférence à une température de plus de 50 à 100°C,
b) la valeur de pH de la dispersion est ajustée avant l'ajout du tensio-actif à une valeur de 7 à 10, de préférence de 7,5 à 9 et
c) puis un tensio-actif est ajouté pour stabiliser la dispersion.

2. Procédé selon la revendication 1, **caractérisé en ce que** la dispersion de microcapsules à stabiliser a une teneur en matières solides d'au moins 15% en poids, de préférence 20% en poids, et en particulier d'au moins 30% en poids, le pourcentage en poids étant rapporté à la dispersion de microcapsules à stabiliser.

3. Procédé selon l'une des revendications 1 à 2, **caractérisé en ce que** la dispersion de microcapsules à stabiliser a une teneur en eau d'au moins 30% en poids, de préférence d'au moins 40% en poids et en particulier d'au moins 50% en poids, le pourcentage en poids étant rapporté à la dispersion de microcapsules à stabiliser.

4. Procédé selon l'une des revendications 1 à 3, **caractérisé en ce que** les microcapsules contiennent des substances odorantes, la proportion de substances odorantes contenues dans les microcapsules étant > 15% en poids, de préférence > 20% en poids, en particulier > 30 en poids, le pourcentage en poids étant rapporté à la dispersion de microcapsules à stabiliser.

5. Dispersion stabilisée de microcapsules (de préférence contenant des substances odorantes), qui peut être obtenue par un procédé selon l'une des revendications 1 à 4.

6. Utilisation des dispersions stabilisées de microcapsules (dé préférence contenant des substances odorantes) selon la revendication 5 pour la préparation d'agents de lavage ou de nettoyage.

7. Utilisation de tensio-actif pour la stabilisation de dispersions de microcapsules (de préférence des dispersions de microcapsules contenant des substances odorantes) à base de résines de mélamine-formaldéhyde, utilisation dans laquelle selon un procédé de production de microcapsules dans lequel une dispersion de microcapsules est générée par condensation d'une résine de mélamine-formaldéhyde, de préférence partiellement méthylée, de préférence dans un rapport molaire mélamine:formaldéhyde:méthanol allant de 1:3,0:2,0 à 1:6,0:4,0 dans de l'eau dans laquelle la matière sensiblement non-hydrosoluble formant les capsules est dispersée, comprenant de préférence des substances odorantes, en présence d'un colloïde protecteur à des valeurs de pH allant de préférence de 3 à 6,5 par préformage des microcapsules à une température allant de préférence de 20 à 50°C, puis par durcissement de la paroi des capsules de préférence à une température de plus de 50 à 100°C, et le pH de la dispersion est ajustée avant l'ajout du tensio-actif à une valeur allant de 7 à 10, de préférence de 7,5 à 9, on utilise un tensio-actif pour stabiliser les dispersions de microcapsules obtenues.

8. Utilisation selon la revendication 8, dans laquelle n utilise comme tensio-actif un tensio-actif cationique, anionique et/ou non-ionique, de préférence un tensio-actif non-ionique, en particulier un oxo-alcool éthoxylé.

9. Procédé de préparation d'un agent de lavage ou de nettoyage contenant des microcapsules (contenant de préférence des substances odorantes), **caractérisé en ce que** l'on mélange un agent de lavage ou de nettoyage avec une dispersion de microcapsules selon la revendication 5.

10. Procédé selon la revendication 9, dans lequel on mélange un assouplissant liquide avec une dispersion de microcapsules selon la revendication 5, de préférence par agitation de la dispersion de microcapsules dans la matrice d'assouplissant, ou par ajout en continu dans un assouplissant liquide et par mélange par le biais des éléments de mélange statiques.

11. Procédé selon la revendication 9 de production d'un agent de lavage ou de nettoyage solide, dans lequel la dispersion de microcapsules est granulée avant d'être mélangée à un agent de lavage ou de nettoyage.
